# EUROPEAN PATENT SPECIFICATION

(11) **EP 1 040 330 B1**
(45) Date of publication and mention of the grant of the patent: **24.04.2013**
(21) Application number: 98960111.7
(22) Date of filing: 08.12.1998
(51) Int. Cl.: G01L 1/24

(54) **METHOD OF USING AN OPTICAL FIBRE AS A HYDROSTATIC PRESSURE SENSOR**
VERFAHREN ZUR VERWENDUNG EINER OPTISCHEN FASER ALS HYDROSTATISCHER DRUCKSENSOR
PROCEDE D'UTILISATION D'UNE FIBRE OPTIQUE COMME CAPTEUR DE PRESSION HYDROSTATIQUE

(30) Priority: 19.12.1997 NO 976012
(43) Date of publication of application: 04.10.2000
(73) Proprietor: Optoplan AS, 7002 Trondheim (NO)
(72) Inventor: KRINGLEBOTN, Jon, Thomas, N-7018 Trondheim (NO)
(74) Representative: Plougmann & Vingtoft A/S
(86) International application number: PCT/NO1998/000367
(87) International publication number: WO 1999/032863

(56) References cited:
- US-A- 4 882 716
- US-A- 5 064 270
- US-A- 5 515 459
- US-A- 5 828 059
- US-A- 5 841 131
- US-A- 5 844 927

## Description

The present invention concerns a method for application of a fibre-optic Bragg grating as an hydrostatic pressure sensor.

### Background

A fibre Bragg grating (FBG) is a permanent, periodic refractive index modulation in the core of a single-mode optical silica glass fibre over a length of typically 1-100mm, formed by transversely illuminating the fibre with a periodic interference pattern generated by ultraviolet laser light, e.g. from a so called Eximer laser, either by using a two-beam interferometer, as disclosed by G. Meltz et.al. in "Formation of Bragg gratings in optical fiber by a transverse holographic method," Opt. Lett., Vol. 14, pp. 823-825, 1989, or by illuminating the fibre through a periodic silica phase mask, as disclosed by K.O. Hill et.al. in "Bragg gratings fabricated in monomode photosensitive optical fiber by UV exposure through a phase-mask," Appl. Phys. Lett., Vol. 62, pp. 1035-1037, 1993. An FBC reflects light within a narrow bandwidth, centred at the Bragg wavelength, λ_{B} = 2n_{eff}Λ, where n_{eff} is the effective refractive index seen by the light propagating in the fibre, and A is the physical period of the refractive index modulation. Outside the FBG bandwidth light will pass with negligible loss. It is known that the reflected Bragg wavelength from an FBG will change with any external perturbation which changes the effective refractive index seen by the propagating light and/or the physical grating period (fibre length), such as temperature and strain. By measuring the reflected Bragg wavelength, using for example a broadband light source and a spectrometer, an FBG can be used as a sensor for measuring such external perturbations. The bandwidth of the reflection spectrum from an FBG sensor is typically 0.1-0.3nm (∼10-30GHz).

An FBG can also be used as a pressure sensor by measuring the shift in Bragg wavelength caused by hydrostatic pressure induced compression of the silica glass fibre. This provides a very simple sensor design with small dimensions and good reproducibility and long-term stability provided by the all-silica construction of the sensor. However, owing to the low compressibility of a silica glass sylinder the sensitivity is low, at 1550nm the Bragg wavelength changes by only -0.4pm/bar. With a high-resolution spectrometer the wavelength resolution can be s 1pm, in which case the pressure resolution will be ≤2.5bar. too low for many applications, and a higher sensitivity sensor is desirable. Important in making a practical FBG pressure sensor is to compensate for temperature fluctuations. The temperature sensitivity at 1550nm is typically ∼10pm/°C, implying that a change in pressure of 2.5bar, yielding a shift in Bragg wavelength of 1pm, corresponds to a change in temperature of only 0.1 °C. One way to temperature compensate the FBG pressure sensor is to use a second FBG, which is isolated from the pressure, to measure the temperature. Because of the low pressure- relative to the temperature-sensitivity, an all-fibre pressure sensor will put strong requirements on the accuracy of the temperature and pressure measurements and on the temperature difference between the two FBGs. Hence, a reduction in temperature sensitivity and a minimisation of the temperature difference between the pressure and the temperature sensor is desirable.

One known technique to enhance the pressure sensitivity and reduce the temperature sensitivity of fibre-optic pressure sensors, and maintain the all-silica construction, is to use a side-hole fibre, which has two open channels symmetrically posititions at each side of the fibre core, as disclosed by Xie et.al., in "Side-hole fiber for fiber-optic pressure sensing," Optics Letters, Vol. 11, pp. 333-335, 1986, where an external hydrostatic pressure is converted into an anisotropic stress in the core region of the fibre, which through the elasto-optical effect induces a birefringence B = nₓ - n_{y}, where nₓ and n_{y} are the refractive indices seen by the two orthogonally polarised fibre eigenmodes in the fibre. The total birefringence is given by the sum of the inherent fibre birefringence and the birefringence B induced by the differential pressure between the surroundings and the side-holes. A stress concentration, and hence changes in refractive indices, by a factor of typically 3-5 can be achieved by suitable choice of the geometry of the side-holes, compared to a standard fibre. Side-hole fibres have been used to make dual-path polarimetric interferometers for high pressure sensing, as described by K.Jansen and Ph. Dabkiewicz in "High pressure fiber-optic sensor with side-hole fiber," SPIE Proceedings, Fiber Optic Sensors II, Vol. 798, pp. 56-60, 1987.

The use of an FBG written in a birefringent side-hole fibre for pressure sensing has been suggested in Norwegian Patent Application No 951052, March 20, 1995 and US Patent Application No. 08/618,789, March 20, 1996, but here only in a distributed feedback fibre laser construction, where the fibre core is doped with one or more of the rare-earths to provide gain when pumped with an external pump source, and the FBG provides feedback and laser operation at the two orthogonally polarised Bragg wavelengths of the FBG with very narrow optical bandwidths (∼10-100kHz). The patent also suggests using measurements of both wavelengths to provide simultaneous measurements of two measurands, such as pressure and temperature. The basic principle of such a two-parameter measurement in a birefringent FBG was first presented in US Patent No. 5,399,854, March 21, 1995, where it was shown that birefringence in an FBG causes a splitting in the reflection spectrum, with one reflection peak corresponding to each of the two polarisation eigenmodes of the fibre.

When fibre-optic pressure sensors are operated under conditions of high temperature and pressure, such as in oil wells, there might be considerable drift effects, as taught us by J.R. Clowes et.al. in "Effects of high temperature and pressure on silica optical fibre sensors," Proceedings of 12th Conference on Optical Fiber Sensors, Williamsburg, VA, pp. 626-629, 1997. The drift effect occurs when the fibre is surrounded by a liquid, such as water, and increases with increasing temperature. The effect is belived to be due to ingress of liquid molecules into the outer layers of the fibre cladding resulting in the development of a highly stressed layer and consequently a tensile stress on the fibre core. It was shown that the use of a hermetic, carbon coating, reduced the effect significantly. In addition, diffusion of gases, such as hydrogen, into the fibre, will cause changes in effective refractive index associated with changes in the light absorption spectrum of the fibre, as disclosed by Malo et al. in "Effective index drift from molecular hydrogen diffusion in hydrogen-loaded optical fibres and its effect on Bragg grating fabrication", Electornics Letters, Vol. 30, pp. 442-444, 1994. Finally, diffusion of gases into side-holes will change the pressure inside the holes, and cause drift in measurements of the external hydrostatic pressure.

### Objects

The main object of the invention is to provide a method for application of a practical all-fibre/all-silica FBG pressure sensor with enhanced pressure sensitivity and reduced temperature sensitivity compared to a standard FBG, i.e. an FBG written into a standard, single-mode silica fibre. A second object is to provide temperature compensated pressure measurements using one FBG only. A third object is to ensure that the sensor is not subject to drift at high temperatures and pressures.

### The Invention

The object of the invention is achieved with a method having features as stated in the characterising part of Claim 1. Further features are stated in the dependent claims.

The main part of the invention comprises an FBG written into the core of a birefringent side-hole fibre, with a birefringence in the operating pressure range i) sufficient to split the two reflection peaks (or transmission dips), with bandwidths of typically 0.1-0.3nm, corresponding to each of the two orthogonal polarisation eigenmodes of the fibre, and ii) with the same sign such that the two peaks do not cross each other under operation. The reflection spectrum of the FBG sensor is measured with a device for measurement of optical wavelengths enable to resolve the peak wavelengths of the two reflection peaks such that by measuring one of the wavelengths and the wavelength separation simultaneous pressure and temperature measurements are achieved owing to the different pressure sensitivity and similar temperature sensitivity of the two peaks. The invention also includes an FBG as described above coated with an hermetic coating, such as a carbon, a ceramic, or a metal coating, to prevent penetration of gases, vapours and liquids in the surrounding environment to ingress/diffuse into the fibre and cause drift in the measured Bragg wavelengths.

### Examples

In the following, the invention will be described with reference to illustrations, where
Fig. 1 shows the cross-section of a side-hole fibre with hermetic coating,
Fig. 2 shows an FBG pressure sensor in a birefringent side-hole fibre, with input, output and reflected optical spectra,
   and
Fig. 3 shows the principle operation of an FBG side-hole fibre pressure sensor, showing the changes in reflected spectrum with an increase in pressure and temperature.

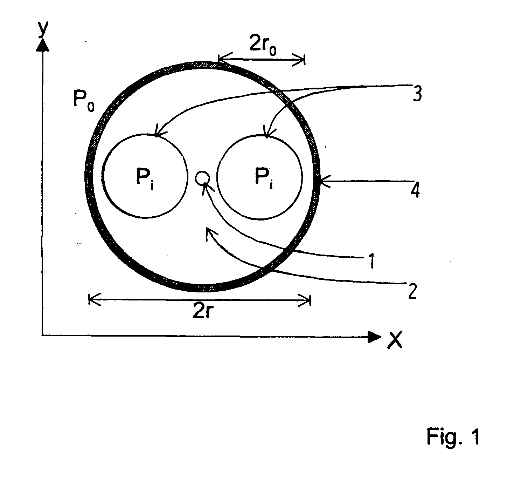

Fig. 1 shows the cross-section of a side-hole fibre with a core 1, which contains a fibre Bragg grating (FBG), a cladding 2, and two side-holes 3 with diameter 2r₀, and a coating 4, which can be hermetic. The coating 4 can be a carbon or a metal coating, such as a gold coating, to prevent penetration of molecules in the surrounding environment, which could be water or hydrogen to ingress/diffuse into the fibre glass and cause changes in the internal stresses and drift in the measured Bragg wavelengths.

The fibre diameter is 2r. The side-holes are oriented along the x-axis. The pressure outside the fibre is P₀, while the internal pressure inside the side-holes is Pᵢ.

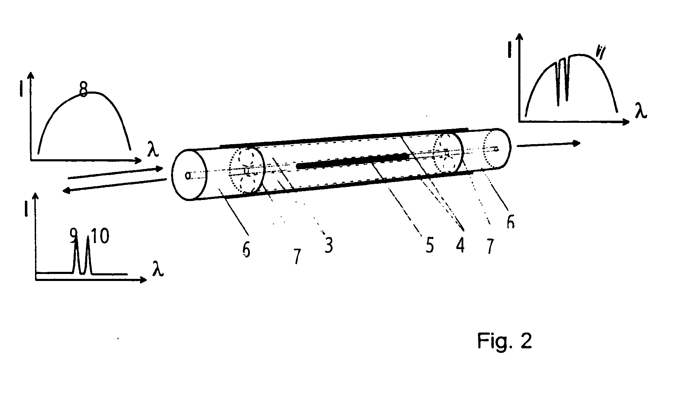

Fig. 2 shows the operation of the side-hole FBG sensor in principle. The FBG 5 is written into the core of the side-hole fibre with side-holes 3, which is spliced between two standard single-mode fibres 6 with splices 7. One way to interrogate the sensor is, as illustrated, to launch into the standard fibre 6 unpolarised, broadband light 8 covering at least the wavelength range of the Bragg reflection from the FBG which is reflected at two orthogonally polarised wavelengths 9 and 10 with a separation Δλ = 2BΛ, with individual bandwidths Δλ_{B} of typically 0.1-0.3nm. The input light which is not reflected is transmitted with a spectrum 11, with dips at the Bragg wavelengths.

The birefringence in the fibre can be expressed as: B = B_{T} +(λ/2π)(SₒPₒ - SᵢPᵢ), where B_{T} is the static birefringence of the fibre, which is a combination of stress induced and geometrically induced birefringence, λ is the wavelength, and Sₒ and Sᵢ is the phase sensitivity of the birefringence to inner and outer pressure pressures Pₒ and Pᵢ, respectively. K.Jansen and Ph. Dabkiewicz in "High pressure fiber-optic sensor with side-hole fiber," SPIE Proceedings, Fiber Optic Sensors II, Vol. 798, pp. 56-60, 1987 measured an Sₒ =16.8 rad/barm at λ = 633nm. This corresponds to an expected wavelength splitting sensitivity δΔλ/δPₒ = 1.8pm/bar, which is a factor of ∼4.5 times the sensitivity of a standard FBG. The measured phase sensitivity of the birefringence to temperature at 633nm was measured to be 0.18rad/°Cm, which correspond to an expected wavelength splitting sensitivity δΔλ/δT = 0.020pm/°C, which is a factor of ∼0.002 smaller than the temperature sensitivity of a standard FBG.

From Y. Namihira, J. Lightwave Technol., Vol. LT-3, pp. 1078-1083,1985 is known that the change in refractive index due to stresses σₓ, σ_{y} and σ_{z} in the fibre core can be expressed as: δnₓ = C₁σₓ + C₂ (σ_{y}+σₓ), and δn_{y} = C₁σ_{y} + C₂ (σₓ+σₓ), where C₁ and C₂ denote the direct and tranverse opto-elastic constant, respectively, where C₁ ≈ -0.74·10⁻¹² Pa⁻¹ and C₂ ≈ -4.1· 10 ¹²Pa⁻¹, c.f. K. Hayata et. al., J. Lightwave Technol., Vol. LT-4, pp. 601-607,1986. Xie et.al presented in "Side-hole fiber for fiber-optic pressure sensing," Optics Letters, Vol. 11, pp. 333-335, 1986 approximate estimates of σₓ = 0 and σ_{y} ≈ -Pₒr/ω (and σ_{z} = 0), where ω = r-2r₀ is the centre wall thickness along the x-axis, with and external pressure Pₒ. This leads to the following estimates for the shifts in the individual wavelengths λ_{Bx} and λ_{By} with a change in external pressure Pₒ: δλ_{Bx}/δPₒ = 1.2 δΔλ/δPₒ and δλ_{By}/δPₒ ≈ 0.2 δΔλ/δPₒ.

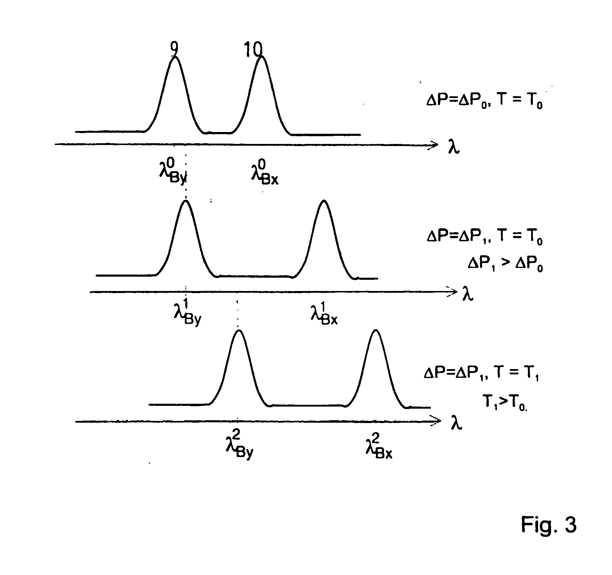

Fig. 3 shows the change in reflected Bragg wavelengths 9 and 10 by increasing the differential pressure ΔP = Pₒ-Pᵢ from ΔP₀ to ΔP₁, keeping a constant temperature. Also shown is the effect of increasing the temperature from To to T₁, shifting both peaks by almost equally, with a typical sensitivity of δλ_{Bx}/δT = δλ_{By}/δT ≈ 1 0pm/°C. By measuring i) the first wavelength, λ_{By}, which as a relatively small pressure sensitivity, and ii) the wavelength splitting λ_{Bx} - λ_{By}, both differential pressure ΔP and the temperature can be measured with high accuracy, owing to the low cross-sensitivity.

## Claims

1. Method of using an optical fibre as a hydrostatic pressure sensor, which optical fibre has a core (1) and a cladding (2), **characterised in** a combination of a fibre-optic Bragg grating (5) written into the core (1) of side-hole optical fibre, and two side-holes (3) included in the cladding (2) of the optical fibre, where said side-hole optical fibre is spliced in-between standard single mode fibres (6), so that a change in differential pressure between the surroundings and the side-holes will cause a change in the fibre birefringence and consequently a change in wavelength separation between the two reflection peaks of the grating corresponding to each of the two orthogonal polarisation eigenmodes of the fibre, with an enhanched pressure sensitivity compared to the pressure included wavelength shift of a standard fibre grating, and the side-hole fibre has a total birefringence in the operating pressure range sufficient to split the two grating reflection, and such that the two peaks do not cross each other under operation.

2. Method according to Claim 1,
**characterised in that** by measuring the wavelength separation between the two reflection peaks, which is proporational to the total fibre birefringence, and measuring the wavelength of at least one of the individual reflection peaks, which shift nearly equally with shifts in temperature, with a device for measurement of optical wavelengths, the differential pressure between the surroundings and the side-holes and the temperature can be determined accurately using only one grating, owing to the low cross-sensitivity with such measurements.

3. Method according to Claim 1,
**characterised in that** the fibre-optic Bragg grating in the side-hole fibre is coated with an hermetic coating (4), which can be a carbon, a ceramic, or a metal coating, such as a gold coating, to prevent penetration of gases, vapours or liquids in the surrounding environment, which could be water or hydrogen to ingress/diffuse into the fibre glass and cause drift in the measured Bragg wavelengths.

4. Method according to Claim 2,
charactrised in that the device is based on a broadband source and a narrowband tuneable optical filter.

5. Method according to Claim 2,
charactrised in that the device is based on a narrowband tuneable laser source.

## Patentansprüche

1. Sensor für hydrostatischen Druck mit einer Lichtleitfaser, wobei die Lichtleitfaser einen Kern (1) und einen Mantel (2) aufweist, **dadurch gekennzeichnet, daß** in den Kern (1) ein faseroptisches Bragg-Gitter (5) eingeschrieben ist, wobei der Sensor so konstruiert ist, daß eine Druckänderung der Umgebung eine Änderung der Faserdoppelbrechung und als Folge eine Änderung des Wellenlängenabstands zwischen den beiden Reflexionsmaxima des Gitters bewirkt, die jeder der beiden orthogonalen Polarisationseigenmoden der Lichtleitfaser entsprechen, und wobei die Lichtleitfaser eine Gesamtdoppelbrechung im Betriebsdruckbereich aufweist, die ausreicht, um die beiden Gitterreflexionsmaxima zu trennen, so daß sich die beiden Maxima im Betrieb nicht überkreuzen.

2. Sensor nach Anspruch 1, wobei die Lichtleitfaser eine Lichtleitfaser mit seitlichen Bohrungen ist, vorzugsweise eine Lichtleitfaser mit zwei im Mantel (2) eingeschlossenen seitlichen Bohrungen (3).

3. Sensor nach Anspruch 1 oder 2, wobei das faseroptische Bragg-Gitter mit einer hermetischen Beschichtung (4) überzogen ist, vorzugsweise einer Schicht aus Kohlenstoff, Keramik oder Metall, vorzugsweise einer Goldbeschichtung, um weitgehend zu verhindern, daß in der Umgebung enthaltene Gase, Dämpfe oder Flüssigkeiten in das Faserglas eindringen/diffundieren und eine Abweichung der gemessenen Bragg-Wellenlänge verursachen.

4. Sensor nach Anspruch 3, wobei die Gase, Dämpfe oder Flüssigkeiten Wasser und/oder Wasserstoff aufweisen.

5. Sensor nach einem der Ansprüche 1 bis 4, wobei die zuerst erwähnte Lichtleitfaser zwischen normalen Einmodenfasern (6) gespleißt wird.

6. Sensor nach einem der Ansprüche 1 bis 5, wobei die zuerst erwähnte Lichtleitfaser im Vergleich zu der druckinduzierten Wellenlängenverschiebung eines normalen Fasergitters eine erhöhte Druckempfindlichkeit aufweist.

7. Vorrichtung, die einen Sensor nach einem der Ansprüche 1 bis 6 und eine Breitbandlichtquelle sowie ein abstimmbares optisches Schmalbandfilter aufweist.

8. Vorrichtung, die einen Sensor nach einem der Ansprüche 1 bis 6 und eine abstimmbare Schmalbandlaserlichtquelle aufweist.

9. Meßverfahren für hydrostatischen Druck unter Verwendung eines Sensors nach einem der Ansprüche 1 bis 6 oder einer Vorrichtung nach Anspruch 7 oder 8.

10. Verfahren nach Anspruch 9, wobei durch Messung des Wellenlängenabstands zwischen den beiden Reflexionsmaxima, der proportional zur Gesamtdoppelbrechung der Faser ist, und durch Messung der Wellenlänge mindestens eines der individuellen Reflexionsmaxima, die sich mit Temperaturverschiebungen nahezu in gleichem Maße verschiebt, wegen der niedrigen Querempfindlichkeit bei solchen Messungen die Druckdifferenz zwischen der Umgebung und einem Bezugsdruck und die Temperatur mit einem Gerät zur Messung optischer Wellenlängen unter Verwendung nur eines Gitters genau bestimmt werden können.

## Revendications

1. Capteur de pression hydrostatique qui comprend une fibre optique, laquelle fibre optique comporte une âme (1) et un gainage (2), **caractérisé en ce qu'**un réseau de Bragg à fibre optique (5) est écrit dans l'âme (1) de la fibre optique, dans lequel le capteur est construit de telle sorte qu'une variation de pression dans les parties avoisinantes génère une variation de la biréfringence de fibre et par conséquent, une variation en termes de séparation de longueurs d'onde entre les deux crête de réflexion du réseau en correspondance avec chacun des deux modes propres de polarisations orthogonales de la fibre et dans lequel la fibre optique présente une biréfringence totale dans la plage de pressions de fonctionnement qui suffit pour séparer les deux crêtes de réflexion de réseau, et de telle sorte que les deux crêtes ne se croisent pas l'une l'autre en fonctionnement.

2. Capteur selon la revendication 1, dans lequel la fibre optique est une fibre optique à trou latéral, de préférence une fibre avec deux trous latéraux (3) qui sont inclus dans le gainage (2).

3. Capteur selon la revendication 1 ou 2, dans lequel le réseau de Bragg à fibre optique est revêtu d'un revêtement hermétique (4), de préférence un revêtement en carbone, en céramique ou en métal, de préférence un revêtement en or, afin d'empêcher de façon substantielle que des gaz, des vapeurs ou des liquides dans l'environnement avoisinant n'entrent/ne se diffusent dans le verre de fibre et ne génèrent une dérive au niveau de la longueur d'onde de Bragg mesurée.

4. Capteur selon la revendication 3, dans lequel lesdits gaz, lesdites vapeurs ou lesdits liquides comprennent de l'eau et/ou de l'hydrogène.

5. Capteur selon l'une quelconque des revendications 1 à 4, dans lequel la fibre mentionnée en premier est raccordée entre des fibres monomodes standards (6).

6. Capteur selon l'une quelconque des revendications 1 à 5, dans lequel la fibre mentionnée en premier présente une sensibilité à la pression rehaussée par comparaison avec le décalage en termes de longueurs d'onde induit par pression d'un réseau de fibre standard.

7. Appareil comprenant un capteur selon l'une quelconque des revendications 1 à 6, et une source bande large et un filtre optique accordable bande étroite.

8. Appareil comprenant un capteur selon l'une quelconque des revendications 1 à 6, et une source de laser accordable bande étroite.

9. Procédé comprenant la mesure d'une pression hydrostatique en utilisant un capteur selon l'une quelconque des revendications 1 à 6 ou un appareil selon la revendication 7 ou 8.

10. Procédé selon la revendication 9, dans lequel, en mesurant la séparation en termes de longueurs d'onde entre deux crêtes de réflexion, qui est proportionnelle à la biréfringence de fibre totale, et en mesurant la longueur d'onde d'au moins l'une des crêtes de réflexion individuelles, qui se décalent pratiquement de façon égale moyennant des décalages en température, à l'aide d'un dispositif pour une mesure de longueurs d'onde optiques, la pression différentielle entre les parties avoisinantes et une pression de référence et la température peuvent être déterminées de façon précise en utilisant seulement un réseau, du fait de la sensibilité croisée faible moyennant de telles mesures.
